# EUROPÄISCHE PATENTSCHRIFT

(11) **EP 0 531 321 B1**
(45) Veröffentlichungstag und Bekanntmachung des Hinweises auf die Patenterteilung: **03.08.1994**
(21) Anmeldenummer: 91909152.0
(22) Anmeldetag: 15.05.1991
(51) Int. Cl.: F16D 65/56, F16D 65/16, F16D 55/226

(54) **SCHEIBENBREMSE FÜR FAHRZEUGE**
DISK BRAKE FOR VEHICLES
FREIN A DISQUE POUR VEHICULES

(30) Priorität: 07.06.1990 DE 4018227; 26.10.1990 DE 4034165
(43) Veröffentlichungstag der Anmeldung: 17.03.1993
(73) Patentinhaber: KNORR-BREMSE Systeme für Nutzfahrzeuge GmbH, 80809 München (DE)
(72) Erfinder: BAUMGARTNER, Hans, D-8052 Moosburg (DE); HIRSCHLER, Klaus, D-8068 Pfaffenhofen/Ilm (DE); IRASCHKO, Johann, D-8069 Schweitenkirchen (DE); SCHULLERUS, Otto, D-8000 München 90 (DE)
(74) Vertreter: KUHNEN, WACKER & PARTNER
(86) Internationale Anmeldenummer: DE9100402
(87) Internationale Veröffentlichungsnummer: WO9119115

(56) Entgegenhaltungen:
- DE-A- 2 400 470
- DE-A- 2 507 012
- DE-A- 2 817 389
- DE-A- 3 610 569
- DE-A- 3 716 202
- DE-C- 2 409 812

## Beschreibung

Die Erfindung betrifft eine Scheibenbremse für Fahrzeuge, insbesondere Straßenfahrzeuge, mit einem eine Bremsscheibe übergreifenden Bremssattel, der einseitig eine Zuspannvorrichtung mit einem um eine zur Ebene der Bremsscheibe parallel verlaufende Drehachse schwenkbaren Nockenhebel aufweist, dessen Nocken in Bewegungsrichtung wenigstens annähernd rechtwinklig zur Ebene der Bremsscheibe mit wenigstens einer Stellspindel gekoppelt ist, die sich wenigstens annähernd rechtwinklig zur Ebene der Bremsscheibe erstreckt und die verstellbar mit dem Nocken oder einem von diesem bewegbaren Zwischenteil verschraubt ist und gegen deren bremsscheibenseitiges Ende sich ein relativ zum Bremssattel quer zur Bremsscheibe verschieblicher Bremsbelag abstützt und wobei zum Justieren des Lösespiels ein vom Schwenkhub des Nockenhebels betätigter Drehantrieb für die Stellspindel vorgesehen ist.

Derartige Scheibenbremsen sind vielfach vorbekannt. Zumeist ist hierbei lediglich eine Stellspindel vorgesehen, auf welche der zu ihrer Achsrichtung symmetrisch angeordnete Nocken einwirkt und welche durch irgendwelche Antriebe bei überhöhtem Bremshub verschraubbar ist. Aus den DE-A-36 10 569 und 37 16 202 sind jedoch auch bereits Scheibenbremsen mit zwei Stellspindeln bekannt, die mit den Enden einer parallel zur Ebene der Bremsscheibe verlaufenden Traverse verschraubt sind; der Nocken greift hierbei längsmittig an der im wesentlichen rechtwinklig zur genannten Ebene verschieblichen Traverse an. Diese Scheibenbremsen sind mit einer Gleichlaufeinrichtung für die beiden Stellspindeln ausgestattet, welche einen die Stellspindeln direkt oder vermittels Zahnrädern relativ unverdrehbar koppelnden Zahnriemen- oder Kettentrieb aufweisen kann. Bei diesen bekannten Scheibenbremsen erfolgt die Spielnachstellung dadurch, daß die Schwenkbewegungen des Nockenhebels in Bewegungen des Zahnriemens umgesetzt werden, was vermittels eines Reibantriebes vom Nockenhebel zu einer Umlenkrolle für den Zahnriemen oder durch eine am Nockenhebel gehalterte, mit dem Zahnriemen zusammenwirkende, klinkenartige Formfeder erfolgt. Bei beiden bekannten Ausführungen muß also der Zahnriemen bzw. die Gleichlaufeinrichtung die Kräfte für die gleichzeitige Nachstellung beider Stellspindeln übertragen, wodurch der Zahnriemen bzw. die Gleichlaufeinrichtung hoch beansprucht werden kann.

Es ist Aufgabe der Erfindung, eine Scheibenbremse der eingangs genannten Art mit einfachen Mitteln derart auszubilden, daß bei funktionssicherem und -günstigen Nachsstellverhalten der Drehantrieb für die Stellspindel montage- und einbauraumgünstig angeordnet und als kompakte Baueinheit ausbildbar ist, wobei bei Vorhandensein eines Gleichlaufgetriebes dieses bzw. der Zahnriemen während Nachstellvorgängen von nur mäßigen Beanspruchungen belastet, insbesondere von seiner Funktion als Nachstell- Steuerorgan entlastet wird.

Diese Aufgabe wird nach der Erfindung dadurch gelöst, daß der Drehantrieb im wesentlichen in einer axialen, wenigstens bremsscheibenabgewandt offenen Ausnehmung der Stellspindel angeordnet und ein Abtriebsteil des Drehantriebes relativ undrehbar, aber axialverschieblich mit der Stellspindel gekoppelt ist.

Bei Vorhandensein zweier Stellspindeln und einer Traverse kann nach einem ergänzenden Merkmal der weiteren Erfindung (Anspruch 2) nur eine der Verstellspindeln unmittelbar mit einem vom Nockenhebel über einen Schwenkantrieb antreibbaren Drehantrieb gekoppelt sein und die Gleichlaufeinrichtung als Drehantrieb für die andere Stellspindel dienen.

Nach der weiteren Erfindung vorteilhafte Ausbildungsmöglichkeiten einer derartigen Scheibenbremse sind den Merkmalen der weiteren Unteransprüche entnehmbar.

In den Zeichnungen sind bevorzugte Ausführungsbeispiele für nach der Erfindung ausgebildete Scheibenbremsen in den hier wesentlichen Teilen dargestellt, und zwar zeigt
- Fig.1: die Zuspannvorrichtung in einem aufgeschnittenen Bremssattel für eine Scheibenbremse mit zwei durch eine Gleichlaufeinrichtung gekoppelten Stellspindeln,
- Fig.2: eine erste Ausführungsform und
- Fig.3: eine zweite Ausführungsform für einen Drehantrieb einer Stellspindel,
- Fig.4: eine Einzelheit aus Fig.3 in geänderter Blickrichtung, und
- Fig.5: eine weitere Ausführungsform eines Drehantriebes.

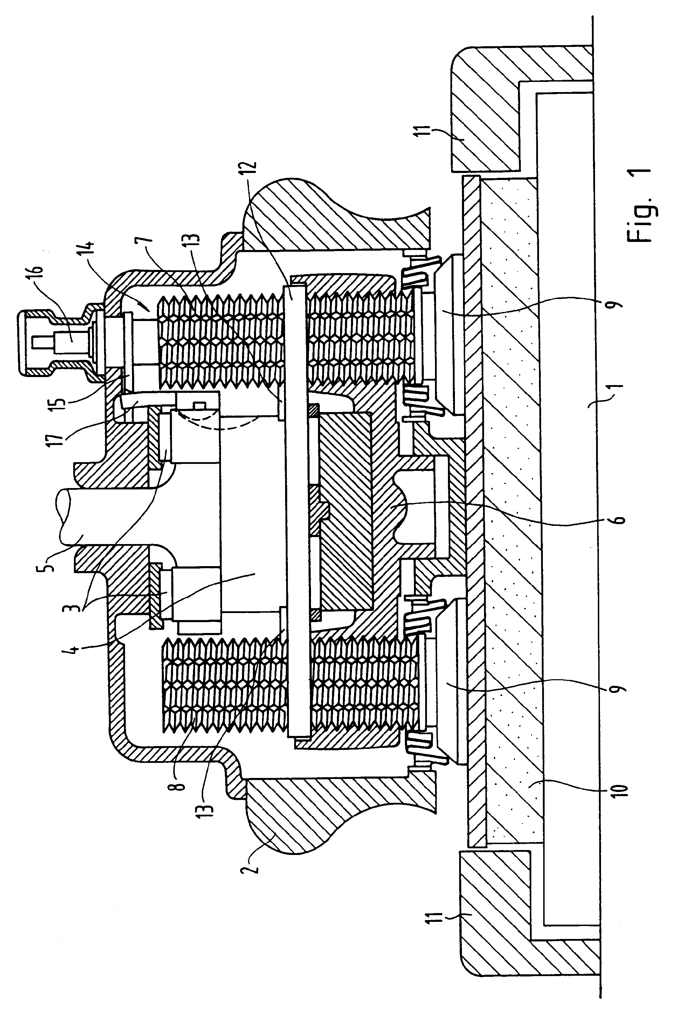

Die Fig.1 zeigt eine Bremsscheibe 1, welche von einem Bremssattel 2 übergriffen ist, von welchem nur ein zu einer Seite der Bremsscheibe 1 befindlicher, die Zuspannvorrichtung aufnehmender Teil dargestellt ist; im übrigen, nicht dargestellten Teil ist der Bremssattel in üblicher Weise ausgebildet und gelagert. Im Bremssattel 2 ist vermittels annähernd halbschalenförmiger Wälzlagerungen 3 ein Nockenhebel 4 um eine zur Ebene der Bremsscheibe 1 parallel verlaufende Drehachse schwenkbar gelagert, der Antrieb des Nockenhebels 4 erfolgt über einen Hebel 5, dessen Ende mit dem Kolben eines am Bremssattel 2 gehalterten Bremszylinders oder aber auch mit einem mechanischen Bremsgestänge gekoppelt sein kann. Es ist für den Einbau der Scheibenbremse von Vorteil, wenn der Hebel 5 sich im wesentlichen aus der Zeichenebene der Fig.l steil nach oben erstreckt. Andererseits ist der Nockenhebel 4 vermittels seines Nockens mit einer Traverse 6 gekoppelt, welche sich innerhalb des Bremssattels 2 parallel zur Ebene der Bremsscheibe 1 erstreckt und senkrecht zu dieser Ebene beweglich ist. Die beiden Enden der Traverse 6 sind mit je einer Stellspindel 7 bzw. 8 justierbar verschraubt, die beiden Stellspindeln 7 und 8 erstrecken sich innerhalb des Bremssattels 2 senkrecht zur Ebene der Bremsscheibe 1 und enden dieser zugewandt mit Druckstücken 9, an welchen ein gegen die Bremsscheibe 1 anpreßbarer Bremsbelag 10 anliegt. Der Bremsbelag 10 ist insbesondere in Umfangsrichtung zur Bremsscheibe 1 an Halterungen 11 quer zur Bremsscheibe 1 verschieblich geführt, die Halterung 11 können wie üblich dem Bremssattel 2 oder einem festen Bremsträger zugehören. Die beiden Stellspindeln 7 und 8 weisen eine ihr Gewinde durchschneidende Axialverzahnung auf, in welche ein die beiden Stellspindeln 7 und 8 drehfest miteinander koppelnder Zahnriemen 12 eingreift. An der Traverse 6 befinden sich Halteorgane 13 zur Führung des Zahnriemens 12.

Die gemäß Fig.l rechte Stellspindel 7 ist mit einem Drehantrieb 14 versehen, der sich im wesentlichen in einer axialen, bremsscheibenabgewandt offenen Ausnehmung der Stellspindel 7 befindet, bremsscheibenabgewandt aus der Stellspindel 7 herausragt, dort einen radial auskragenden Antriebshebel 15 trägt, in später genauer zu erläuternder Weise kardanisch auslenkbar am Bremssattel 2 gehaltert ist und mit einem von außen zugänglichen Antriebszapfen 16 enden kann. Das freie Ende des Antriebshebels 15 wirkt mit einem Anschlagstift 17 zusammen, der andererseits am Nockenhebel 4 gehaltert ist.

Der Bremssattel 2 ist in üblicher Weise relativ querverschieblich zur Bremsscheibe 1 gelagert und trägt einen nicht dargestellten, gegenüberliegend zum Bremsbelag 10 an die Bremsscheibe 1 anpreßbaren Bremsbelag.

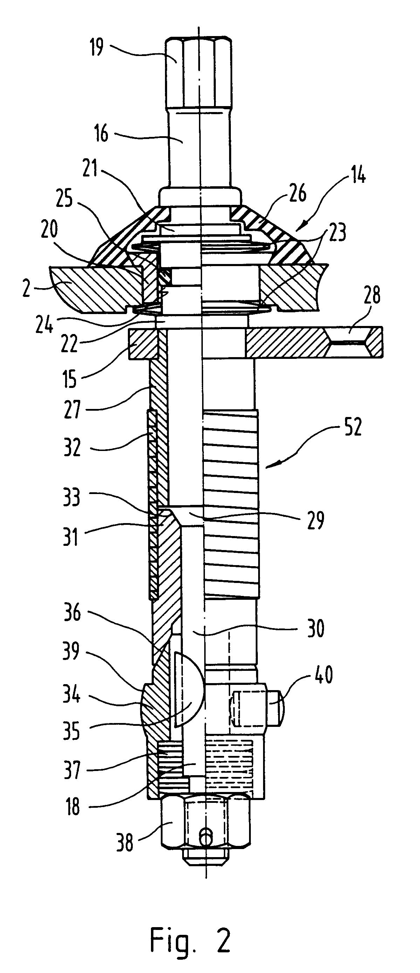

Der in Fig.2 dargestellte Drehantrieb 14 für die Stellspindel 7 weist eine sich über-dessen ganze Länge erstreckende Spindel 18 auf, welche einerseits mit dem Antriebszapfen 16 endet, welcher Ansatzflächen 19 für ein nicht dargestelltes Drehwerkzeug, beispielsweise einen Schraubenschlüssel, trägt. Zur kardanisch auslenkbaren Halterung am Bremssattel 2 weist die Spindel 18 im Anschluß an den Antriebszapfen 16 beiderseits einer von ihr mit Spiel durchgriffenen, am Bremssattel 2 gehalterten Buchse 20 je einen Flansch 21 bzw. 22 auf, zwischen welchen und der Buchse 20 bzw. dem Bremssattel 2 Tellerfedern 23 eingespannt sind. Das Spiel der Spindel 18 in der Bohrung 24 der Buchse 20 ist von einem an der Spindel 18 gehalterten Dichtring 25 überbrückt. Eine auf die Spindel 18 aufgeknüpfte und an der Buchse 20 gehalterte Haube 26 aus elastischem Material schützt die Halterung der Spindel 18 vor Verschmutzung. In Anschluß an den bremssattelinneren Flansch 22 ist auf der Spindel 18 eine erste Buchse 27 drehbar gelagert, welche drehfest den Antreibhebel 15 trägt. Der Antreibhebel 15 ist an seinem freien Ende mit einer Bohrung 28 versehen, in welche der in Fig.2 nicht dargestellte Anschlagstift 17 eingreift; die Koppelung von Antreibhebel 15 und Anschlagstift 17 kann jedoch auch kugelkopf- oder gabelartig ausgebildet sein. Anschließend an die erste Buchse 27 ist auf einem über einen konischen Abschnitt 29 verjüngten Teil 30 der Spindel 18 als zweite Buchse eine Konusbuchse 31 drehbar gelagert. Die beiden mit geringem Abstand voreinander endenden Buchsen 27 und 31 weisen an den einander zugewandten Abschnitten gleichen Außendurchmesser auf und sind an diesen Abschnitten von einer Schlingfeder 32 mit radialer Vorspannung umfaßt. Innenseitig weist die Konusbuchse 31 eine zum Abschnitt 29 adäquate Konusfläche auf und bildet so zusammen mit dieser eine Konuskupplung 33. Anschließend an die Konusbuchse 31 ist auf der Spindel 18 eine Abtriebsbuchse 34 gelagert, welche vermittels einer in fluchtende Nuten der Spindel 18 und der Abtriebsbuchse 34 eingreifenden Scheibenfeder 35 axial verschieblich und undrehbar zur Spindel 18 ist. Die Konusbuchse 31 und Abtriebsbuchse 34 liegen vermittels eine Konuskupplung 36 bildender Konusflächen aneinander an. Anschließend an die Abtriebsbuchse 34 durchsetzt die Spindel 18 eine Vorspannfeder 37, welche zwischen die Abtriebsbuchse 34 und eine justierbar mit der Spindel 18 verschraubte Mutter 38 eingespannt ist; die Vorspannfeder 37 belastet also die beiden Konuskupplungen 36 und 33 in Schließrichtung. Die Abtriebsbuchse 34 trägt außenseitig einen radial geringfügig vorspringenden, balligen Abschnitt 39, mit welchem sie in der Axialbohrung der in Fig.2 nicht dargestellten Stellspindel 7 geführt ist; die Stellspindel 7 überragt auf Seiten der Mutter 38 den Drehantrieb 14 und umfaßt andererseits letzteren bis dicht vor den Antreibhebel 15. In der Axialbohrung der Stellspindel 7 befinden sich aus den Zeichnung nicht ersichtliche Längsnuten, in welche verschieblich in die Abtriebsbuchse 34 im Bereich deren Abschnittes 39 eingelassene Radialbolzen 40 eingreifen; die Radialbolzen 40 koppeln somit die Abtriebsbuchse 34 undrehbar, aber längsverschieblich mit der Stellspindel 7. Es können zweckmäßig über den Umfang gleichmäßig verteilt mehrere Längsnuten in der Stellspindel 7 und Radialbolzen 40 an der Abtriebsbuchse 34 vorgesehen sein.

Die Schlingfeder 32 wirkt als Einwegdrehkupplung 52, welche beim Drehen des Antreibhebels 15 in einer Drehrichtung einen Freilauf zwischen der ersten Buchse 27 und der Konusbuchse 31 und bei entgegengesetzter Drehrichtung eine feste Drehverbindung zwischen diesen beiden Buchsen bewirkt. Auf die Konusbuchse 31 wirkende Drehmomente werden einerseits über die Konuskupplung 36 unmittelbar und andererseits über die Konuskupplung 33, die Spindel 18 sowie die Scheibenfeder 35 mittelbar auf die Abtriebsbuchse 34 übertragen, das übertragbare Drehmoment hängt dabei von der Vorspannung der Vorspannfeder 37 ab und ist durch Justieren der Mutter 38 somit einstellbar.

Die vorstehend beschriebene Scheibenbremse arbeitet wie folgt :

Im Lösezustand der Scheibenbremse weist der Bremsbelag 10 ebenso wie der bezogen auf die Bremsscheibe 1 gegenüberliegende, nicht dargestellte Bremsbelag ein Lüftspiel zur Bremsscheibe 1 auf. Zum Zuspannen der Scheibenbremse ist der Nockenhebel 4 vermittels des Hebels 5 um die Wälzlagerung 3 zu schwenken, wobei die Traverse 6 in Richtung zur Bremsscheibe 1 verschoben wird; die Traverse 6 nimmt dabei die mit ihr verschraubten Stellspindeln 7 und 8 und über die Druckstücke 9 den Bremsbelag 10 mit. Durch geeignete Ausbildung des Nockens des Nockenhebels 4, welcher auf die Traverse 6 einwirkt, ist dabei erreichbar, daß bei der Bewegung des Nockenhebels 4 anfänglich eine geringe, sich mit der Bewegung jedoch auf hohe Werte steigernde Kraftübersetzung zwischen dem Nockenhebel 4 und dem Bremsbelag 10 erfolgt. Infolge seiner Halterung am Bremssattel 2 folgt der Drehantrieb 14 nicht der Axialverschiebung der Stellspindel 7, zwischen beiden erfolgt also eine axiale Relativverschiebung.

Der Nockenhebel 4 nimmt bei seiner Bewegung den Anschlagstift 17 mit, welcher durch seinen Eingriff in die Bohrung 28 den Antreibhebel 15 verdreht. Diese Drehung wird über die erste Buchse 27 und die in dieser Drehrichtung sperrende Schlingfeder 32 auf die Konusbuchse 31 übertragen. Bis zum Anlegen der Reibbeläge 10 an die Bremsscheibe 1 tritt nur geringer Bewegungswiderstand auf, eine Verschraubung zwischen der Traverse 6 und den Stellspindeln 7 und 8 in Bewegungsrichtung letzterer zur Bremsscheibe 1 hin ist daher ebenfalls ohne nennenswerten Bewegungswiderstand möglich, und die Drehbewegung der Konusbuchse 31 kann daher über die Konuskupplung 36 sowie die Konuskupplung 33 und die Scheibenfeder 35 auf die Abtriebsbuchse 34 übertragen werden, welche vermittels ihrer Drehkopplung durch die in die Längsnuten der Stellspindel 7 eingreifenden Radialbolzen 40 die Drehbewegung auf die Stellspindel 7 in deren Verschraubrichtung zur Bremsscheibe 1 hin überträgt. Die Drehbewegung der Stellspindel 7 wird vermittels des Zahnriemens 12 auf die Stellspindel 8 übertragen, welche sich infolgedessen in gleichem Maße wie die Stellspindel 7 in Richtung zur Bremsscheibe 1 hin relativ zur Traverse 6 verschraubt. Sobald infolge der durch die Bewegung des Nockenhebels 4 bewirkten Verschiebung der Traverse 6 in Verbindung mit der vorstehend erwähnten Relativverschraubung zwischen den Stellspindeln 7 und 8 und der Traverse 6 der Bremsbelag 10 und nach geringer, entgegengesetzter Bewegung des Bremssattels 2 auch der gegenüberliegende Bremsbelag an der Bremsscheibe 1 anliegen bzw. mit noch geringer Kraft angedrückt werden, tritt ein Bewegungswiderstand auf, welcher den weiteren Bremsbelagbewegungen entgegenwirkt und rasch auf hohe Werte steigt; das weitere feste Zuspannen der Scheibenbremse kann nur unter elastischer Verformung ihrer Teile, insbesondere auch des Bremssattels 2 und der Reibbeläge 10, erfolgen. Beim nach dem Anlegen der Bremsbeläge 10 erfolgenden Weiterbewegen des Nockenhebels 4 wird zwar durch den Anschlagstift über den Antreibhebel 15 und die Schlingfeder 32 die Konusbuchse 31 weitergedreht, doch rutschen nun infolge des hohen, sich auch als Verschraubungswiderstand zwischen den Stellspindeln 7 und 8 sowie der Traverse 6 auswirkenden Bewegungswiderstandes die Konuskupplungen 33 und 36 durch, die Abtriebsbuchse 34 erfährt also keine weitere Drehung und es erfolgt keine weitere Relativverschraubung zwischen den Stellspindeln 7 und 8 sowie der Traverse 6 während des Festbremshubes. Es ergibt sich somit, daß eine Relativverschraubung zwischen den Stellspindeln 7 und 8 und der Traverse 6 nur während des Anlegehubes vom Lösezustand bis zum Anliegen der Bremsbeläge erfolgt, das Lösespiel der Scheibenbremse somit unabhängig von deren während nachfolgender Festbremshübe auftretenden, elastischen Verformungen ist.

Der Zahnriemen 12 wird während dieser Vorgänge nur von den Antriebskräften für die eine Stellspindel 8 belastet.

Beim nachfolgenden Lösen der Scheibenbremse wird der Nockenhebel 4 zurückgeschwenkt, über den Anschlagstift 17 erfolgt daher ein entsprechendes Zurückdrehen des Antreibhebels 15. Dieses Zurückdrehen erfolgt in Entsperrichtung der Schlingfeder 32, so daß es von der ersten Buchse 27 nicht auf die Konusbuchse 31 übertragen wird, letztere mitsamt der Spindel 18 und der Abtriebsbuchse 34 sowie den Stellspindeln 7 und 8 somit keinerlei Drehung erfährt. Das Nichtdrehen der Konusbuchse 31 mitsamt der Spindel 18 und der Abtriebsbuchse 34 wird hierbei durch den Reibschluß der Spindel 18 zum Bremssattel 2 unterstützt, welcher im Bereich der Halterung der ersteren an letzterem vorhanden ist.

Zum Auswechseln verschliessener Reibbeläge 10 ist die Scheibenbremse von Hand zurückzustellen. Hierzu müssen die Stellspindeln 7 und 8 in Sperrichtung der Schlingfeder 32 gedreht werden, was durch Ansetzen eines geeigneten Drehwerkzeuges, beispielsweise Schraubenschlüssels an die Ansatzfläche 19 erfolgen kann. Beim manuellen Drehen der Spindel 18 wird über die Scheibenfeder 35 die Abtriebsbuchse 34 mitgenommen, die beiden Konuskupplungen 33 und 36 rutschen dabei durch, da durch den vom Anschlagstift 17 festgehaltenen Antreibhebel 15 und die Schlingfeder 32 die Konusbuchse 31 am Mitdrehen gehindert ist. Die Stellspindel 7 und durch deren Kupplung vermittels des Zahnriemens 12 mit der Stellspindel 8 auch letztere werden dabei in Entfernungsrichtung von der Bremsscheibe 1 relativ zur Traverse 6 verschraubt.

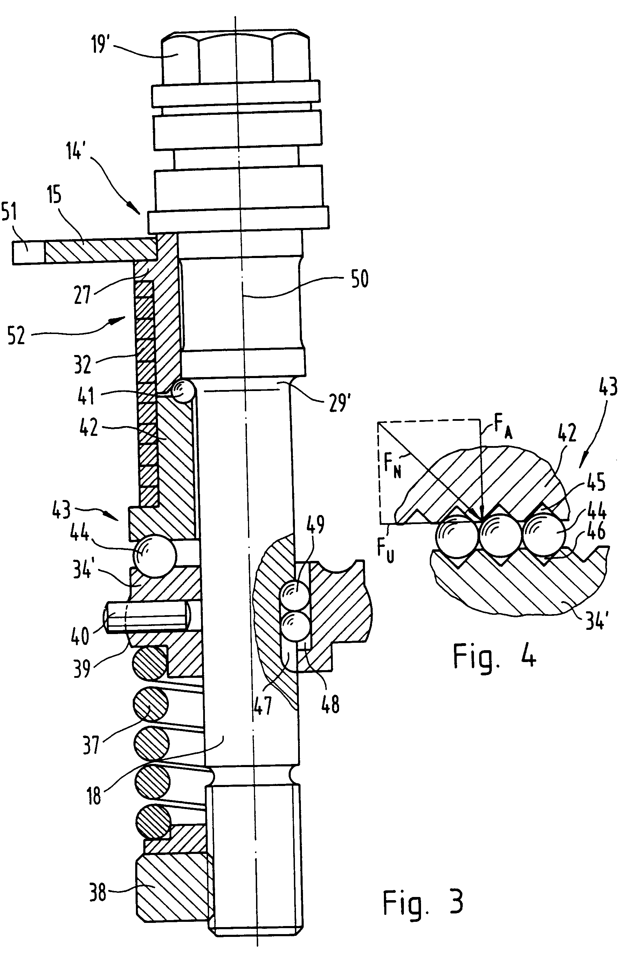

Anstelle des mit einer doppelten Konuskupplung 33,36 ausgestatteten Drehantriebes 14 gemäß Fig.2 kann auch ein mit Kugelrampen ausgestatteter Drehantrieb 14′ gemäß Fig.3 vorgesehen werden, dessen Einordnung in die Scheibenbremse vollständig der Beschreibung zur Fig.l entspricht, auch der grundsätzliche Aufbau sowie die Funktionsweise weisen große Ähnlichkeit zum Drehantrieb 14 nach Fig.2 auf, einander entsprechende Teile sind daher auch mit gleichen Bezugszahlen versehen.

Der Drehantrieb 14′ nach Fig.3 weist eine Spindel 18 auf, die an ihrem bremsscheibenabgewandten, die Stellspindel 7 überragenden Ende mit einem als Ansatzfläche dienenden Sechskantkopf 19′ versehen ist. Die Spindel 18 ist entsprechend derjenigen nach Fig.2 kardanisch auslenkbar am Bremssattel 2 gehaltert, diese Halterung ist in Fig.3 nicht dargestellt. Im Anschluß an die kardanische Halterung ist auf der Spindel 18 die erste Buchse 27 drehbar gelagert, welche drehfest mit dem Antreibhebel 15 verbunden ist. Der Abschnitt 29′ der Spindel 18 ist als Lauffläche für die Kugeln eines Axiallagers 41 ausgebildet; das Axiallager 41 stützt eine als zweite Buchse dienende Rampenbuchse 42 in Axialrichtung zur ersten Buchse 27 drehbar gegen die Spindel 18 ab und hält zugleich die erste Buchse 27 in deren axialer Lage. Die beiden Buchsen 27 und 42 sind durch die als Einwegdrehkupplung 52 dienende Schlingfeder 32 miteinander gekoppelt. Die Rampenbuchse 42 ist der ersten Buchse 27 abgewandt stirnseitig über eine Kugelrampenkupplung 43 mit der Abtriebssbuchse 34′ gekoppelt, welche anschließend undrehbar, aber axial verschieblich auf der Spindel 18 gelagert ist. Die Kugelrampenkupplung 43 weist zwischen den einander zugewandten Stirnseiten der Rampenbuchse 42 und der Abtriebsbuchse 34′ eingeordnete Kugeln 44 auf, welche in in Umfangsrichtung aufeinanderfolgende, einander zugekehrte Vertiefungen 45 bzw. 46 der beiden Buchsen 42 und 34′ eingreifen. In Fig.4 ist ein in Umfangsrichtung verlaufender Teilschnitt dargestellt, es ist ersichtlich, daß die Vertiefungen 45 und 46 nach dieser Ausführungsform kegel- oder keilnutenartig mit schrägen Auflaufflächen für die Kugeln 44 ausgeführt sind. Zur drehsicheren Längsführung weisen die Spindel 18 und die Abtriebsbuchse 34′ einander zugewandte Längsnuten 47 und 48 auf, in welche Sperrkugeln 49 eingreifen. Die Abtriebsbuchse 34′ weist im Breich ihres balligen Abschnittes 39 wiederum radial auskragende Radialbolzen 40 auf, welche in die nicht gezeigten Längsnuten der Stellspindel 7 eingreifen. Die Abtriebsbuchse 34′ ist in Andrückrichtung an die Rampenbuchse 42 von der Vorspannfeder 37 belastet, deren Vorspannung durch die justierbar mit der Spindel 18 verschraubt Mutter 38 einstellbar ist.

In Fig.3 sind zur vereinfachten Darstellung mit Ausnahme der Abtriebsbuchse 34′ nur die linksseitig der Achse 50 der Spindel 18 befindlichen Schnitte für die auf der Spindel 18 befindlichen Teile dargestellt.

Die Funktion einer mit dem Drehantrieb 14′ gemäß Fig.3 ausgestatteten Scheibenbremse entspricht weitgehend derjenigen nach Fig.2, wobei jedoch verschleißbehaftete Gleitreibung weitgehend durch rollende Reibung ersetzt ist. Während des Bremsanlegehubes beim Einbremsen wird der Antreibhebel 15 vom in dessen Gabel 51 eingreifenden Anschlagstift 17 mitsamt der ersten Buchse 27 gedreht, diese Drehung wird über die Schlingfeder 32 auf die Rampenbuchse 42 übertragen. Die axiale Verspannung zwischen der Rampenbuchse 42 und der Abtriebsbuchse 34′ durch die Vorspannfeder 37 hindert die Kugeln 44 der als Drehmoment-Begrenzungskupplung dienenden Kugelrampenkupplung 43 bis zum Erreichen eines Grenzwertes des von der Rampenbuchse 42 auf die Abtriebsbuchse 34′ zu übertragendenden Drehmomentes an einem Auflaufen auf die Wandungen der Vertiefungen 45 und 46, was ein Auseinanderspreizen von Rampenbuchse 42 und Abtriebsbuchse 34′ zur Folge hätte. Infolgedessen wird beim geringen, während des Anlegehubes zu übertragenden Drehmoment die Abtriebsbuchse 34′ mitgedreht, die Radialbolzen 40 nehmen die Stellspindel 7 und vermittels des Zahnriemens 12 auch die Stellspindel 8 mit und beide Stellspindeln 7 und 8 werden relativ zur Traverse 6 in Annäherungsrichtung zur Bremsscheibe 1 verschraubt. Bei auftretendem Bewegungs- und Verschraubungswiderstand nach Anlegen der Reibbeläge 10 an die Bremsscheibe 1 wird der vorstehend erwähnte Drehmoment-Grenzwert überschritten, so daß während des Festbremshubes die Kugeln 44 auf die schrägen Wandungen der Vertiefungen 45 und 46 auflaufen. Da der Festbremshub jedoch relativ gering ist, gelangen die Kugeln 44 hierbei nicht vollständig aus ihren jeweiligen Vertiefungen 45 und 46, es tritt also normalerweise kein Überratschen auf. Beim Aufflaufen der Kugeln 44 weicht die Abtriebsbuchse 34′ gemäß Fig.3 nach unten aus, was die Sperrkugeln 49 mit nur geringer Reibung ermöglichen. Beim Auflaufen der Kugeln 44 auf die schrägen Auflaufflächen und oberen Kanten der Vertiefungen 45 und 46 ändert sich die Richtung der zwischen beiden wirkenden Normalkraft F_{N}, welche in die von der Vorspannfeder 37 ausgeübte Axialkraft F_{A} sowie die umfangskraft F_{U} zerlegbar ist, die Umfangskraft F_{U} ist dabei vom zwischen der Rampenbuchse 42 und der Abtriebsbuchse 34′ wirkenden Drehmoment bestimmt. Die beim Aufflaufen der Kugeln 44 auf die Ränder der Vertiefungen 45 und 46 eintretende Richtungsänderung der Normalkraft F_{N} wirkt sich als Verkleinern der Umfangskraft F_{U} aus, das zwischen Rampenbuchse 42 und Abtriebsbuchse 34′ übertragbare Drehmoment verringert sich also, wodurch auch der Drehwiderstand für den Antreibhebel 15 entsprechend verringert wird. Hieraus ergibt sich eine sich mit dem Verdrehwinkel zwischen der Rampenbuchse 42 und der Abtriebsbuchse 34′ verringernde Belastung und damit Schonung der Antriebselemente des Drehantriebes 14′.

Beim Lösen der Scheibenbremse laufen anfänglich während des Zurückdrehens des Antreibhebels 15 die Kugeln 44 in ihre Vertiefungen 45 und 46 zurück, beim weiteren Rückdrehen des Antreibshebels 15 löst sich die Schlingfeder 32 und entkuppelt die erste Buchse 27 von der Rampenbuchse 42, so daß letztere sich nicht weiter verdreht; die Abtriebsbuchse 34′ erfährt keine Drehung.

Auch bei dem Drehantrieb 14′ nach Fig.3 wird somit der Lüfthub der Scheibenbremse während des Anlegehubes beim Einbremsen nachgestellt, während des Festbremsvorganges auftretende, elastische Verformungen nehmen keinen Einfluß.

Zum manuellen Rückstellen bei Belagwechsel ist der Sechskantkopf 19′ derart zu drehen, daß bei durch die Sperrkugeln 49 sowie die Radialbolzen 40 erfolgender Mitnahme der Stellspindeln 7 und über den Zahnriemen 12 der Stellspindel 8 diese Stellspindeln 7 und 8 in Entfernungsrichtung von der Bremsscheibe 1 relativ zur Traverse 6 verschraubt werden. Bei diesem Drehen der Spindel 18 ratschen unter oszillierender Axialbewegung der Abtriebsbuchse 34′ die Kugeln 44 von einer auf die jeweils folgende Vertiefung 45 bzw. 46 über.

Bei beiden Ausführungen des Drehantriebes 14,14′ nach Fig.2 und Fig.3 sind im Antriebsstrang vom Anschlagsstift 17 bis zur Stellspindel 7 unvermeidliche, während des Lösehubes wirkende Drehspiele vorhanden, insbesondere kann der Eingriff des Anschlagstiftes 17 in den Antreibhebel 15 spielbehaftet sein und zur Drehmomentübertragung durch die Schlingfeder 32 kann eine gewisse, geringe Relativverdrehung zwischen der ersten Buchse 27 und der Konus- bzw. Rampenbuchse 31 bzw. 42 erforderlich sein. Hieraus resultiert, daß kein im Lösezustand die Bremsbeläge 10 an die Bremsscheibe 1 angepresst haltender Nachstellvorgang auftreten kann, es ist vielmehr stets ein sicheres Lösen gewährleistet.

Selbstverständlich sind auch Kombinationen der Drehantriebe 14 und 14′ möglich, insbesondere kann die Abtriebsbuchse 34 eine undrehbare Kugellängsführung mittels Sperrkugeln 49 oder die Abtriebsbuchse 34′ eine Scheibenfeder für ihre drehsichere Längsführung zur Spindel 18 erhalten.

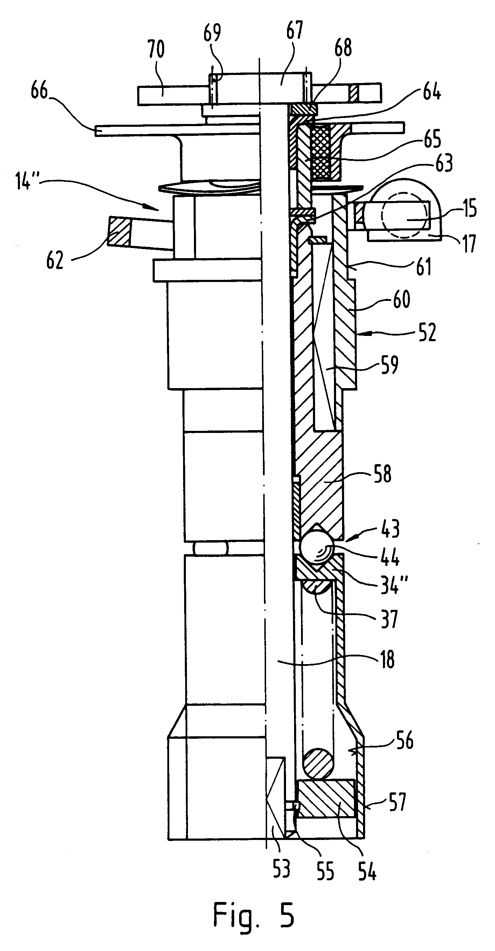

Gemäß der weiteren Ausführungsform nach Fig.5 weist der Drehantrieb 14˝ eine Spindel 18 auf, die in einem kurzen, bremsscheibenzugewandten Endbereich Anflächungen 53 besitzt. In diesem Bereich ist die Spindel 14˝ von einem Ringkörper 54 umgeben, der ein den Anflächungen 53 entsprechendes Innenprofil besitzt und somit zumindest drehfest mit der Spindel 18 gekoppelt ist. Ein als Anschlag dienender, in die Spindel 18 eingelassener Sicherungsring 55 sichert den Ringkörper 54 gegen ein Abgleiten von der Spindel 18 in Richtung zur Bremsscheibe 1. Der Ringkörper 54 ist außenseitig mit einem nichtzylindrischen Längsprofil versehen, das axialverschieblich, aber unverdrehbar in ein entsprechendes, innenseitiges, nichtzylindrisches Längsprofil 56 einer auf der Spindel 18 drehbar und axialverschieblich gelagerten Abtriebsbuchse 34˝ eingreift. Die Längsprofile sind vorzugsweise als Mehrflächenprofile, insbesondere als Sechskantprofil ausgebildet, dem innenseitigen Längsprofil 56 der Abtriebsbuchse 34˝ steht ein entsprechendes, nichtzylindrisches Längsprofil 57 an der Außenseite der Abtriebsbuchse 34˝ gegenüber. Die beiden Längsprofile 56 und 57 der Abtriebsbuchse 34˝ erstrecken sich über einen erweiterten Längsbereich der letzteren; das außenseitige Längsprofil 57 greift in ein entsprechendes Innenprofil der in Fig.5 nicht dargestellten Stellspindel ein, wodurch diese beiden Teile zueinander unverdrehbar, aber längsverschieblich gekoppelt sind. Auf dem Ringkörper 54 stützt sich eine Vorspannfeder 37 ab, die andererseits an einer Innenschulter der Abtriebsbuchse 34˝ anliegt und letztere in Entfernungsrichtung von der Bremsscheibe belastet. Anschließend an die Abtriebsbuchse 34˝ ist auf der Spindel 18 eine als zweite Buchse dienende Innenbuchse 58 eines eine Einwegdrehkupplung 52 bildenden Hülseneinwegfreilaufes 59 drehbar gelagert; die Sperrkörper des Hülseneinwegfreilaufes können wie üblich als Kugeln, Walzen oder dergl. ausgebildet sein. Die einander zugewandten Stirnseiten der Abtriebsbuchse 34˝ und der Innenbuchse 58 weisen über den Umfang verteilt Vertiefungen auf, in welche Kugeln 44 eingreifen, derart, daß eine von der Vorspannfeder 37 vorgespannte, axiale Kugelrampenkupplung 43 gebildet wird, wie sie in Fig.4 dargestellt und im einzelnen zu dieser Fig.4 beschrieben ist; diese Kugelrampenkupplung 43 dient als Drehmoment-Begrenzungskupplung für das zwischen Abtriebsbuchse 34˝ und der Innenbuchse 58 übertragbare Drehmoment. Die Funktionsweise der Kugelrampenkupplung 43 ist wie zu Fig.4 beschrieben.

Ein bremsscheibenabgewandter Endbereich der eine erste Buchse darstellenden Außenbuchse 60 des Hülseneinwegfreilaufes 59 trägt Schlüsselflächen 61, welche als Anflächungen ausgebildet sein können. Im Bereich der Schlüsselflächen 61 umgreift ein Ring- oder Gabelabschnitt eines Antreibhebels 15 die Außenbuchse 60 derart, daß der Antreibhebel 15 - bezogen auf die Achse der Außenbuchse 60 - höchstens begrenzt drehbar, aber kippbar mit der Außenbuchse 60 gekoppelt ist. An seinem freien Ende ist der Antreibhebel 15 kugelgelenkartig mit einem Anschlagstift 17, wie er vorstehend bereits beschrieben wurde, verbunden. Die erwähnte Kipp-Möglichkeit vermag durch die Traverse und den Anschlagstift 17 sowie die Kugelgelenk-Anordnung auf den Antreibhebel 15 eingeleitete Kippbewegungen aufzunehmen. Zwischen dem Antreibhebel 15 und der Außenbuchse 60 kann im Bereich der Schlüsselflächen 61 ein Drehspiel vorgesehen werden, dessen Größe dem Soll-Anlegehub der Scheibenbremse entsprechend zu bemessen ist. Die Stellspindel 7 umschließt den Drehantrieb 14˝ bis maximal einen Spielabstand vor dem Antreibhebel 15; mit Verschleiß der Bremsbacken verschraubt sie sich zur Bremsscheibe hin, während der Drehantrieb 14˝ seine axiale Lage beibehält. Der Bereich des Längsprofiles 57 verbleibt jedoch auch bei maximalem Verschleiß in der Stellspindel 7 und mit dieser relativ unverdrehbar gekoppelt.

Bremsscheibenabgewandt liegt die Innenbuchse 58 stirnseitig an einem auf der Spindel 18 axialverschieblichen Gleitlagering 63 an, zwischen welchem und einen weiteren, weitgehend gleichartigen Gleitlagerring 64 ein Haltering 65 eingespannt ist. Einer oder auch beide der Gleitlagerringe 63 und/oder 64 kann bzw. können unverdrehbar auf der Spindel 18 geführt sein. Der Haltering 65 ist vermittels eines Elastomerlagerringes am Bremssattel bzw. einem mit diesem fest verbundenen Ring 66 begrenzt eigenbeweglich gehaltert, wodurch die Spindel 18 begrenzt kardanisch auslenkbar ist. Der Gleitlagering 64 stützt sich andererseits gegen einen endseitigen Flansch 67 der Spindel 18 ab, die Vorspannfeder 37 verspannt somit auch die Gleitlagerringe 63 und 64 gegen den Haltering 65. Zwischen dem Gleitlagerring 64 und dem Flansch 67 kann ein Zwischenring 68 eingeordnet sein.

Die Anordnung und Auslegung der Gleitlagerringe 63 und 64 ist in bezug auf die Spindel 18 derart zu treffen, daß die Spindel 18 einen Reibschluß gegen Drehungen zum Bremssattel 2 aufweist, der höher ist als der Freilaufwiderstand der Einwegdrehkupplung 52; der Drehmomentenunterschied zwischen beiden kann größer als eine Zehnerpotenz sein.

Der Flansch 67 trägt an seinem Umfang eine Axialverzahnung 69, die in eine Innverzahnung eines den Flansch 67 umschließenden Zahnrades 70 eingreift. Das Zahnrad 70 gehört der Gleichlaufeinrichtung zu, es kann mit einem Zahnriemen, einer Kette oder einem weiteren Zahnrad kämmen. Zur Rückstellung bei Bremsbelagwechsel kann die Spindel von der flanschseitigen Stirnseite her eine nicht gezeigte Sackbohrung mit Schlüsselflächen, insb. eine im Querschnitt sechseckige Ausnehmung zum Zusammenwirken mit einem Imbusschlüssel als Drehwerkzeug, aufweisen. Die Spindel 18 braucht hierbei den Bremssattel nicht seitlich überragen, sie kann flanschseitig durch einen am Bremssattel gehalterten Deckel abgedeckt sein.

Die Wirkungsweise und Funktion des Drehantriebes 14˝ nach Fig.5 entspricht weitgehend denjenigen des Drehantriebes 14′ nach Fig.3, so daß sich weitere Erläuterungen hierzu erübrigen.

Selbstverständlich sind auch Kombinationen bzw. der Austausch von Konstruktionseinzelheiten zwischen dem Drehantrieb 14˝ mit den Drehantrieben 14 und 14′ möglich.

Die Belastung des Zahnriemens 12 wird gering gehalten, da er lediglich durch die Drehantriebe 14,14′,14˝ auf die Stellspindel 7 bewirkte Drehbewegungen auf die Stellspindel 8 übertragen muß und somit nur dem Antrieb der letzteren, nicht aber dem Antrieb beider Stellspindeln dient. Als Gleichlaufeinrichtung für die beiden Stellspindeln 7 und 8 muß kein Zahnriemen 12, es kann auch ein Kettentrieb oder eine Zahnradkoppelung der beiden Stellspindeln 7 und 8 vorgesehen sein.

Bei Nutzung eines Drehantriebes 14,14′ oder 14˝ nach der Fig.2,3 oder 5 bei einer Scheibenbremse ohne Traverse, mit nur einer unmittelbar oder über ein Zwischenteil mit dem Nocken des Nockenhebels justierbar gekoppelten Stellspindel entfällt selbstverständlich die Gleichlaufeinrichtung mit ihren Einzelteilen.

In Abwandlung der vorstehend beschriebenen Ausführungsbeispiele können bei Vorhandensein von zwei Stellspindeln 7 und 8 diese beiden Stellspindeln mit jeweils einem eigenen Drehantrieb 14,14′ oder 14˝ ausgestattet werden, die gleichartig während des Bremsenanlegehubes oder aber abwechselnd, einer während des Bremsanlegehubes und der andere während des Löselüfthubes, zur Spielnachstellung wirksam sind. Weiterhin ist es auch möglich, den bzw. die beiden Drehantriebe 14,14′ bzw. 14˝ derart auszugestalten, daß sie nicht beim Bremsenanlegehub, sondern nur beim Löselüfthub wirksam sind.

### Kurzfassung:

Die Scheibenbremse mit einem eine Bremsscheibe (1) übergreifenden Bremssattel (2) weist einseitig eine Zuspannvorrichtung auf. Die Zuspannvorrichtung beinhaltet einen Nockenhebel (4), der um eine zur Bremsscheibenebene parallele Achse drehbar ist und vorzugsweise über eine Traverse (6) mit einer oder zwei Stellspindeln (7,8) zusammenwirkt, gegen welche sich ein Bremsbelag (10) abstützt. Die beiden Stellspindeln (7 und 8) sind vermittels eines Zahnriemens (12) gekoppelt. In eine Ausnehmung der einen Stellspindel (7) ragt ein Drehantrieb (14), welcher vom Nockenhebel (4) antreibbar ist und während des Anlegehubes ein Verschrauben der Stellspindel (7) und damit über den Zahnriemen (12) auch der Stellspindel (8) in Annäherungsrichtung an die Bremsscheibe (1) bewirkt. Der Drehantrieb (14) beinhaltet eine Einwegdrehkupplung sowie eine Drehmoment-Begrenzungskupplung, wodurch ein Verschrauben der Stellspindeln (7 und 8) während des Festbremshubes und des Lösehubes vermieden wird.

### Bezugszeichenliste

- 1: Bremsscheibe
- 2: Bremssattel
- 3: Wälzlagerung
- 4: Nockenhebel
- 5: Hebel
- 6: Traverse
- 7: Stellspindel
- 8: Stellspindel
- 9: Druckstücken
- 10: Bremsbelag
- 11: Halterung
- 12: Zahnriemen
- 13: Halterungen
- 14: Drehantrieb
- 14′: Drehantrieb
- 14˝: Drehantrieb
- 15: Antreibhebel
- 16: Antriebszapfen
- 17: Anschlagstift
- 18: Spindel
- 19: Ansatzfläche
- 19′: Sechskantkopf
- 20: Buchse
- 21: Flansch
- 22: Flansch
- 23: Tellerfeder
- 24: Bohrung
- 25: Dichtring
- 26: Haube
- 27: l.Buchse
- 28: Bohrung
- 29: Abschnitt
- 30: Teil
- 31: Konusbuchse
- 32: Schlingfeder
- 33: Konuskupplung
- 34: Abtriebsbuchse
- 34′: Abtriebsbuchse
- 35: Scheibenfeder
- 36: Konuskupplung
- 37: Vorspannfeder
- 38: Mutter
- 39: Abschnitt
- 40: Rdialbolzen
- 41: Axiallager
- 42: Rampenbuchse
- 43: Kugelrampenkupplung
- 44: Kugel
- 45: Vertiefung
- 46: Vertiefung
- 47: Längsnut
- 48: Längsnut
- 49: Sperrkugel
- 50: Achse
- 51: Gabel
- 52: Einwegdrehkupplung
- 53: Anflächung
- 54: Ringkörper
- 55: Sicherungsring
- 56: Längsprofil
- 57: Längsprofil
- 58: Innenbuchse
- 59: Hülseneinwegfreilauf
- 60: Außenbuchse
- 61: Schlüsselfläche
- 62: Ring- oder Gabelabschnitt
- 63: Gleitlagering
- 64: Gleitlagering
- 65: Haltering
- 66: Ring
- 67: Flansch
- 68: Zwischenring
- 69: Axialverzahnung
- 70: Zahnrad
- F_{N}: Normalkraft
- F_{A}: Axialkraft
- F_{U}: Umfangskraft

## Patentansprüche

1. Scheibenbremse für Fahrzeuge, insbesondere Straßenfahrzeuge, mit einem eine Bremsscheibe (1) übergreifenden Bremssattel (2), der einseitig eine Zuspannvorrichtung mit einem um eine zur Ebene der Bremsscheibe (1) parallel verlaufende Drehachse schwenkbaren Nockenhebel (4) aufweist, dessen Nocken in Bewegungsrichtung wenigstens annähernd rechtwinklig zur Ebene der Bremsscheibe (1) mit wenigstens einer Stellspindel (7,8) gekoppelt ist, die sich wenigstens annähernd rechtwinklig zur Ebene der Bremsscheibe (1) erstreckt und die verstellbar mit dem Nocken oder einem von diesem bewegbaren Zwischenteil (Traverse 6) verschraubt ist und gegen deren bremsscheibenseitiges Ende sich ein relativ zum Bremssattel (2) quer zur Bremsscheibe (1) verschieblicher Bremsbelag (10) abstützt, und wobei zum Justieren des Lösespiels ein vom Schwenkhub des Nockenhebels (4) betätigter Drehantrieb (14,14′14˝) für die Stellspindel (7,8) vorgesehen ist, dadurch gekennzeichnet, daß der Drehantrieb (14,14′,14˝) im wesentlichen in einer axialen, wenigstens bremsscheibenabgewandt offenen Ausnehmung der Stellspindel (7) angeordnet und ein Abtriebsteil (34,34′,34˝) des Drehantriebes (14,14′,14˝) relativ undrehbar, aber axialverschieblich mit der Stellspindel (7) gekoppelt ist.

2. Scheibenbremse nach Anspruch 1, wobei das Zwischenteil als eine zur Ebene der Bremsscheibe (1) parallel verlaufende Traverse (6) ausgebildet ist, deren jedes Ende mit einer Stellspindel (7,8) verschraubt ist, und wobei die beiden Stellspindeln (7 und 8) durch eine Gleichlaufeinrichtung (Zahnriemen 12, Zahnrad 70) drehfest miteinander gekoppelt sind, dadurch gekennzeichnet, daß nur eine der Stellspindeln (7) unmittelbar mit einem vom Nockenhebel (4) über einen Schwenkantrieb (Antreibhebel 15, Anschlagstift 17) antreibbaren Drehantrieb (14,14′14˝) gekoppelt ist und die Gleichlaufeinrichtung (Zahnriemen 12, Zahnrad 70) als Drehantrieb für die andere Stellspindel (8) dient.

3. Scheibenbremse nach Anspruch 1 oder 2, dadurch gekennzeichnet, daß der Drehantreib (14,14′,14˝) an seinem bremsbelagabgewandt die Stellspindel (7) überragenden Ende kardanisch auslenkbar am Bremssattel (2) gehaltert ist und zwischen dieser Halterung und der Stellspindel (7) einen radial auskragenden Antreibhebel (15) trägt, dessen Ende über eine Anschlagkupplung mit einem am Nockenhebel (4) gehalterten Anschlagstift (17) gekoppelt ist.

4. Scheibenbrmse nach Anspruch 3, dadurch gekennzeichnet, daß der Drehantrieb (14,14′) eine Spindel (18) aufweist, die eine Bohrung (24) des Bremssattels (2) bzw. einer in diesen eingesetzten Buchse (20) mit radialem, von einem Dichtring (25) überbrückten Spiel durchgreift und beiderseits der Bohrung (24) Flansche (21,22) aufweist, deren wenigstns einer unter Zwischenordnen einer Feder (23) gegen den Bremssattel (2) bzw. die Buchse (20) abgestützt ist (Fig.2).

5. Scheibenbremse nach Anspruch 3 oder 4, dadurch gekennzeichnet, daß der Antreibhebel (15) mit einer relativ zu einer bzw. der Spindel (18) drehbaren, ersten Buchse (27,60) verbunden ist, daß die erste Buchse (27,60) über eine in Nachstell-Drehrichtung sperrende Einwegdrehkupplung (52) mit einer auf der Spindel (18) drehbar gelagerten, zweiten Buchse (31,42,58) gekuppelt ist, daß die zweite Buchse (31,42,58) über eine Drehmoment-Begrenzungskupplung (33 und 36;43) mit einer auf der Spindel (18) zu dieser undrehbar gelagerten Abtriebsbuchse (34,34′,34˝) gekuppelt ist, und daß die Abtriebsbuchse (34,34′,34˝) undrehbar, aber axialverschieblich mit der sie aufnehmenden Stellspindel (7) gekoppelt ist.

6. Scheibenbremse nach Anspruch 5, dadurch gekennzeichnet, daß die Spindel (18) an ihrem bremsbelagabgewandten Ende Ansatzflächen (19,19′) für ein Drehwerkzeug zu ihrer willkürlichen Drehung aufweist.

7. Scheibenbremse nach Anspruch 5 oder 6, dadurch gekennzeichnet, daß das von der Drehmoment-Begrenzungskupplung (33 und 36;43) übertragbare Drehmoment durch Justieren der axialen Pressung zwischen der zweiten Buchse (31,42) und der axialverschieblich auf der Spindel (18) gelagerten Abtriebsbuchse (34,34′) justierbar ist (Fig.2 und 3).

8. Scheibenbremse nach Anspruch 6 oder 7, dadurch gekennzeichnet, daß die Abtriebsbuchse (34,34′,34˝) in Richtung zur zweiten Buchse (31,42,58) von einer von der Spindel (18) durchsetzten Feder (37) belastet ist, die sich andererseits gegen die Spindel (18) abstützt.

9. Scheibenbremse nach Anspruch 8, dadurch gekennzeichnet, daß die Feder sich gegen eine justierbar mit der Spindel (18) verschraubte Mutter (38) abstützt (Fig.2 und 3).

10. Scheibenbremse nach Anspruch 5, dadurch gekennzeichnet, daß zur axialverschieblichen und undrehbaren Lagerung der Abtriebsbuchse (34′) auf der Spindel (18) beide einander zugewandte Längsnuten (47,48) aufweisen, in welchen in beide Nuten (47) und (48) eingreifende Sperrkugeln (49) gelagert sind (Fig.3, rechte Seite).

11. Scheibenbremse nach Anspruch 5, dadurch gekennzeichnet, daß die Abtriebsbuchse (34,34′) wenigstens einen radial auskragenden Bolzen (40) aufweist, der in wenigstens eine Innenlängsnut der Stellspindel (7) eingreift (Fig.2 oder Fig.3, linke Seite).

12. Scheibenbremse nach Anspruch 5, dadurch gekennzeichnet, daß die Abtriebsbuchse (34˝) wenigstens einen Abschnitt mit außenseitigem, nichtzylindrischem Längsprofil (57), gegebenenfalls Mehrflächen- , insbesondere Sechskantprofil aufweist, der in einem entsprechenden Innenprofil der Stellspindel (7) geführt ist (Fig.5).

13. Scheibenbremse nach einem oder mehreren der Ansprüche 5 bis 12, dadurch gekennzeichnet, daß die Einwegdrehkupplung (52) als Schlingfeder (32) ausgebildet ist, die zueinander fluchtende, aneinander angrenzende, zylindrische Abschnitte der ersten und der zweiten Buchse (37 und 31 bzw. 42) mit radialer Vorspannung umschließt (Fig.2 und 3).

14. Scheibenbremse nach einem oder mehreren der Ansprüche 5 bis 13, dadurch gekennzeichnet, daß die Drehmoment-Begrenzungskupplung als Konuskupplung (36) an den aneinander anliegendnen Stirnseiten der zweiten Buchse (31) und der Abtriebsbuchse (34) ausgebildet ist (Fig.2).

15. Scheibenbremse nach Anspruch 14, dadurch gekennzeichnet, daß zwischen die Spindel (18) und die zweite Buchse (31) eine weitere, von der Feder (37) in Schließrichtung belastete Konuskupplung (33) eingeordnet ist (Fig.2).

16. Scheibenbremse nach einem oder mehreren der Ansprüche 5 bis 13, dadurch gekennzeichnet, daß die Einwegdrehkupplung als Kugelrampenkupplung (43) ausgebildet ist, die zwischen den einander zugewandten Stirnseiten der zweiten Buchse (42,58) und der Abtriebsbuchse (34,34˝) eingeordnete Kugeln (44) aufweist, welche in in Umfangsrichtung aufeinanderfolgende, einander zugekehrte Vertiefung (45,46) der beiden Buchsen (42,34′) eingreifen (Fig.3,4 und 5).

17. Scheibenbremse nach Anspruch 16, dadurch gekennzeichnet, daß die Vertiefungen (45,46) in Umfangsrichtung der Buchsen (34′42) schräge Auflaufflächen für die Kugeln (44) aufweisen (Fig.4).

18. Scheibenbremse nach Anspruch 5 oder 6, gegebenenfalls in Verbindung mit einem oder mehreren der Ansprüche 7 bis 12, dadurch gekennzeichnet, daß die erste Buchse die Außenbuchse (60) und die zweite Buchse die Innenbuchse (58) eines Hülseneinwegfreilaufes (59), gegebenenfalls eines Kugel- oder Walzen-Einwegfreilaufes ist und daß die Spindel (18) über wenigstens eine Reibdrehkupplung (Gleitlagerring 63,64) mit einem drehfesten Teil (Ring 66), gegebenenfalls dem Bremssattel (2), gekoppelt ist, wobei das Freilaufdrehmoment des Hülseneinwegfreilaufes (59) kleiner als das von der Reibkupplung (Gleitlagerring 63,64) übertragbare Drehmoment ist (Fig.5).

19. Scheibenbremse nach Anspruch 18, dadurch gekennzeichnet, daß die Drehmoment-Begrenzungskupplung als axiale Kugelrampenkupplung (43) zwischen den einander zugewandten Stirnseiten der Innenbuchse (58) des Hülseneinwegfreilaufes (59) und der in Andrückrichtung an diese federbelasteten Abtriebsbuchse (34˝) ausgebildet ist (Fig.5).

20. Scheibenbremse nach den Ansprüchen 12 und 19, dadurch gekennzeichnet, daß eine die Abtriebsbuchse (34˝) in Schließrichtung der Kugelrampenkupplung (43) belastenden Feder (37) gegen einen Ringkörper (54) abgestützt ist, der durch einen Anschlag, gegebenenfalls Sicherungsring (55), in Entspannrichtung der Feder (37) gegen die ihn vermittels Anflächungen (53) unverdrehbar durchsetzende Spindel (18) abgefangen ist, daß der Abschnitt der Abtriebsbuchse (34˝) auch innenseitig das nichtzylindrische Längsprofil (56) aufweist und daß der Ringkörper (54) ein entsprechendes, nichtzylindrisches Außenprofil aufweist, mit welchem er relativ unverdrehbar, aber axialverschieblich an dem innenseitigen Längsprofil (56) der Abtriebsbuchse (34˝) geführt ist (Fig.5).

21. Scheibenbremse nach Anspruch 20, dadurch gekennzeichnet, daß die Spindel (18) beiderseitig einer sie nahe ihres bremsscheibenabgewandten Endes umfassenden, vermittels eines Elastomerlagerringes beweglich am Bremssattel (2) gehaltenen Halteringes (65) je einen radial auskragenden Gleitlagerring (63,64) aufweist, deren bremsscheibenzugewandter Gleitlagerring (63) axialverschieblich ist und an der bremsscheibenabgewandten Stirnseite der Innenbuchse (58) des Hülseneinwegfreilaufes (59) anliegt und deren bremsscheibenabgewandter Gleitlagerring (64) gegen einen Flansch (67) der Spindel (18) abgefangen ist (Fig.5).

22. Scheibenbremse nach Anspruch 21, dadurch gekennzeichnet, daß der den Gleitlagerring (64) abfangende Flansch (67) das bremsscheibenabgewandte Ende der Spindel (18) bildet und an seinem Umfang eine Axialverzahnung (69) trägt, die in eine entsprechende Innenaxialverzahnung an einem den Flansch (67) umgebenden Zahnrad (70) eingreift, das der Gleichlaufeinrichtung zugehört (Fig.5).

23. Scheibenbremse nach einem oder mehreren der Ansprüche 18 bis 22, dadurch gekennzeichnet, daß der Antreibhebel (15) einen die Außenbuchse (60) des Hülseneinwegfreilaufes (59) umgreifenden Ring- oder Gabelabschnitt (62) aufweist, der - bezogen auf die Achse der Außenbuchse (60) - vermittels Schlüsselflächen (61) höchstens begrenzt verdrehbar, aber kippbar mit der Außenbuchse (60) gekoppelt ist.

## Claims

1. A disc brake for vehicles, in particular road vehicles, with a brake caliper (2) which contacts a disc brake disc (1) and comprises a tensioning device on one side with a cam lever (4) swivellable around an axis of rotation running parallel to the disc brake plane (1), the cam being coupled, in the direction of movement at least approximately at right angles to the brake disc plane (1), with at least one adjusting spindle (7, 8) which extends at least approximately at right angles to the disc brake plane (1) and which is adjustably screwed together with the cam or with an intermediate part which can be moved by the cam (tie-bar 6) and against the disc brake end of which spindle a brake lining (10) is supported, this brake lining being displaceable relative to the brake caliper (2) transversely crosswise to the brake disc (1) and wherein, to adjust the loosening stroke, a rotary drive (14, 14′ 14˝) actuated by the swivelling motion of the cam lever (4) is provided for the adjusting spindle (7, 8) characterized in that the rotary drive (14, 14′, 14˝) is disposed essentially in an axial, recess of the adjusting spindle (7) open at least on the side away from the brake disc and an output part (34, 34′, 34˝) of the rotary drive (14, 14′, 14˝) is coupled with the adjusting spindle (7) non-rotational, but axially displaceable fashion relate to it.

2. A disc brake according to claim 1, wherein the intermediate part takes the form of a tie-bar (6) running parallel to the brake disc plane (1), each end of the tie-bar being screwed together with an adjusting spindle (7, 8) and wherein both adjusting spindles (7 and 8) are coupled with each other by means of a synchronizing device (toothed belt 12, toothed wheel 70) such that they are rotationally fixed, characterized in that only one of the adjusting spindles (7) is coupled directly with a rotary drive (14, 14′ 14˝) that can be driven by the cam lever (4) via an actuator (driven lever 15, stop pin 17) and that the synchronizing device (toothed belt 12, toothed wheel 70) serves as rotary drive for the other adjusting spindle (8).

3. A disc brake according to claims 1 or 2 characterized in that the rotary drive (14, 14′, 14˝) is mounted, on its end turned away from the brake lining, said end protruding above the adjusting spindle (7), in a cardanic manner on the brake caliper (2) and carrying, between this mounting and the adjusting spindle (7), a radially projecting driven lever (15), the end of which is coupled, by means of a stop coupling, with a stop pin (17) mounted on the cam lever (4).

4. A disc brake according to claim 3 characterized in that the rotary drive (14, 14′) comprises a spindle (18), which penetrates a bore hole (24) of the brake caliper (2) and/or a bushing (20) set into the latter having radial play bridged by a sealing washer (25) and comprises flanges (21, 22) on both sides of the bore hole (24) of which at least one is supported against the brake caliper (2) and/or the bushing (20) under intermediate arrangement of a spring (23) (Fig. 2).

5. A disc brake according to claims 3 or 4 characterized in that the driven lever (15) is connected with a rotary, first bushing (27, 60) relative to a and/or to the spindle (18), in that the first bushing (27, 60) is coupled with a second bushing (31, 42, 58) rotationally mounted on the spindle (18) by means of a locking one way rotary coupling in the adjusting direction of rotation, in that the second bushing (31, 42, 58) is coupled with an output bushing (34, 34′, 34˝) mounted on the spindle (18) and non-rotational thereto, by means of a torque limit coupling (33 and 36; 43) and in that the output bushing (34, 34′, 34˝) is coupled non-rotationally, but is axially displaceable with the adjusting spindle (7) which accommodates it.

6. A disc brake according to claim 5 characterized in that the spindle (18) comprises attachment surfaces (19, 19′) on its end turned away from the brake lining, for arbitrary rotation by a rotary tool.

7. A disc brake according to claims 5 or 6 characterized in that the torque transferable from the torque limit coupling (33 and 36; 43) is adjustable by means of adjusting the axial pressure between the second bushing (31, 42) and the output bushing (34, 34′) which is mounted on the spindle (18) and is axially displaceable (Fig. 2 and 3)

8. A disc brake according to claims 6 or 7, characterized in that the output bushing (34, 34′ 34˝) is spring-loaded in the direction towards the second bushing (31, 42, 58), by a spring (37) penetrated by and the spindle (18), said spring being supported at the other side against the spindle (18).

9. A disc brake according to claim 8 characterized in that the spring is supported against a nut (38) screwed together with the spindle (18) in such a way that it is adjustable (Figs. 2 and 3).

10. A disc brake according to claim 5 characterized in that, for the axially displaceable and non-rotary bearing arrangement of the output bushing (34′) on the spindle (18), both arrangements comprise longitudinal grooves (47, 48) which face each other and in which are mounted locking balls (49) which engage said grooves (Fig. 3 right-hand side).

11. A disc brake according to claim 5 characterized in that the output bushing (34, 34′) comprises at least one radially projecting bolt (40), which engages at least one inner longitudinal groove of the adjusting spindle (7) (Fig. 2 or Fig. 3 left-hand side).

12. A disc brake according to claim 5 characterized in that the output bushing (34˝) comprises at least one section with an external, non-cylindrical longitudinal profile (57), if necessary multiple-surface, in particular hexagon profile, which is guided into a corresponding inner profile of the adjusting spindle (7) (Fig. 5).

13. A disc brake according to one or more of claims 5 to 12, characterized in that the one-way rotary coupling (52) takes the form of a wrap spring (32) which surrounds the cylindrical sections of the first and the second bushings (37 and 31 and/or 42) which are aligned with and adjacent to one another (Fig.2 and 3) with an initial tension.

14. A disc brake according to one or more of claims 5 to 13 characterized in that the torque limit coupling takes the form of a cone coupling (36) on the front faces of the second bushing (31) and the output bushing (34), which lie adjacent to one another (Fig. 2).

15. A disc brake according to claim 14 characterized in that between the spindle (18) and the second bushing (31), a further cone coupling (33) is incorporated, which is spring-loaded in the locking direction by a spring (37) (Fig. 2).

16. A disc brake according to one or more of claims 5 to 13 characterized in that the one-way rotary coupling takes the form of a ball-ramp coupling (43) which comprises balls (44) arranged between the opposing front faces of the second bushing (42, 58) and the output bushing (34, 34˝) which engage peripherally into consecutive, facing recesses (45,46) of the two bushings (42, 34′) (Fig. 3, 4 and 5).

17. A disc brake according to claim 16 characterized in that the recesses (45, 46) comprise slanting surfaces for the balls (44) peripherally to the bushings (34′, 42) (Fig. 4).

18. A disc brake according to claims 5 or 6, optionally in conjunction with one or more of the claims 7 to 12 characterized in that the first bushing is the outer bushing (60) and the second bushing is the inner bushing (58) of a one-way free-wheel bushing (59), optionally a ball or roller one-way free-wheel bushing and that the spindle (18) is coupled with a rotationally fixed part (ring 66), optionally the brake caliper (2), by means of at least one rotary friction coupling (plain bearing ring 63, 64), wherein the free-running torque of the one-way free-wheel bushing (59) is smaller than the torque transferable from the friction coupling (plain bearing ring 63, 64) (Fig. 5).

19. A disc brake according to claim 18 characterized in that the torque limit coupling takes the form of an axial ball-ramp coupling (43) between the facing end sides of the inner bushing (58) of the one-way free-wheel bushing (59) and the spring-loaded output bushing (34˝) which presses in the direction of said inner bushing. (Fig. 5).

20. A disc brake according to claims 12 and 19 characterized in that a spring (37) understressing the output bushing (34˝) in the locking direction of the ball-ramp coupling (43) is supported against a ring part (54), which by means of a stop, optionally a locking ring (55), is intercepted in the releasing direction of the spring (37) against the spindle (18), which penetrates it non-rotatably by means of flat surfaces (53), in that the section of the output bushing (34˝) also comprises on its inner side the non-cylindrical longitudinal profile (56) and in that the ring part (54) comprises a corresponding, non-cylindrical, outer profile with which it is guided relatively non-rotationally, but axially displaceably on the inner-sided longitudinal profile (56) of the output bushing (34˝) (Fig. 5).

21. A disc brake according to claim 20 characterized in that the spindle (18) has a radially projecting sliding bearing ring (63, 64) on each side of an encompassing retaining ring (65) mounted movably on the brake caliper (2) near to the end of the spindle away from the disc brake by means of an elastomeric bearing ring, of which the sliding bearing ring (63), on the side of the brake disc is axially displaceable and rests on the end face of the inner bushing (58) of the one-way, free-wheel bushing (59) away from the brake disc, and of which the sliding bearing ring (64) away from the brake disc, is intercepted by a flange (67) of the spindle (18) (Fig. 5).

22. A disc brake according to claim 21 characterized in that the flange (67) which intercepts the sliding bearing ring (64) forms the end of the spindle (18) away from the disc brake and comprises an axial toothing (69) around its periphery, which engages a corresponding inner axial toothing on a toothed wheel (70) which encompasses the flange (67), the toothed wheel belonging to the synchronizing device (Fig. 5).

23. A disc brake according to any one of claims 18 to 22 characterized in that the driven lever (15) comprises a ring or fork section (62), which encompasses the outer bushing (60) of the one-way free-wheel bushing (59) which - with regard to the axis of the outer bushing (60) - is coupled by means of key surfaces (61) such that it is highly limited rotationally, but can be tilted with the outer bushing (60).

## Revendications

1. Frein à disque pour véhicules, notamment véhicules routiers, comportant un étrier de frein (2), qui s'engage par-dessus un disque de frein (1) et qui possède, d'un côté, un dispositif de serrage comportant un levier à came (4), qui peut pivoter autour d'un axe de rotation parallèle au plan du disque de frein (1), et dont la came est accouplée, dans la direction de déplacement, au moins approximativement perpendiculairement au plan du disque de frein (1), à au moins une broche de réglage (7, 8), qui s'étend au moins approximativement perpendiculairement au plan du disque de frein (1) et est vissé, de manière à être réglable, à la came ou à un élément intermédiaire (traverse 6) déplaçable par cette came, et qu'une garniture de frein (10) déplaçable par rapport à l'étrier de frein (2), transversalement par rapport au disque de frein (1), prend appui contre l'extrémité de la broche de réglage, qui est située du côté du disque de frein, et dans lequel pour ajuster le jeu de desserrage, il est prévu pour la broche de réglage (7, 8), un dispositif d'entraînement en rotation (14, 14′, 14˝) actionné sous l'effet de la course de pivotement du levier à came (4), caractérisé par le fait que le dispositif d'entraînement en rotation (14, 14′, 14˝) est disposé essentiellement dans un évidement axial de la broche de réglage (7), qui est ouvert au moins sur le côté tourné à l'opposé du disque de frein, et qu'une partie menée (34, 34′, 34˝) du dispositif d'entraînement (14, 14′, 14˝) est accouplée à la broche de réglage (7) avec blocage en rotation par rapport à cette dernière, mais possibilité de déplacement axial.

2. Frein à disque suivant la revendication 1, dans lequel la partie intermédiaire est réalisée sous la forme d'une traverse (6) qui s'étend parallèlement au plan du disque de frein (1) et dont chaque extrémité est vissée à une broche de réglage (7, 8), et dans lequel les deux broches de réglage (7 et 8) sont accouplées entre elles, avec blocage en rotation, au moyen d'un dispositif de synchronisation (courroie dentée 12, pignon 70), caractérisé par le fait que seule l'une des broches de réglage (7) est accouplée directement à un dispositif d'entraînement en rotation (14, 14′, 14˝) pouvant être entraîné par le levier à came (4) par l'intermédiaire d'un dispositif d'entraînement pivotant (levier d'entraînement 15, tige de butée 17), et que le dispositif de synchronisation (courroie dentée 12, pignon 70) sert de dispositif d'entraînement en rotation pour l'autre broche de réglage (8).

3. Frein à disque suivant la revendication 1 ou 2, caractérisé par le fait que le dispositif d'entraînement en rotation (14, 14′, 14˝) est supporté de manière à pouvoir être orienté, selon un montage à la cardan, sur l'étrier de frein, au niveau de son extrémité tournée à l'opposé de la garniture de frein et qui fait saillie au-delà de la broche de réglage (7), et porte, entre ce support et la broche de réglage (7), un levier d'entraînement (15) qui fait saillie radialement et dont l'extrémité est accouplée, par l'intermédiaire d'un accouplement de butée, à une tige de butée (17) fixée sur le levier à came (4).

4. Frein à disque suivant la revendication 3, caractérisé par le fait que le dispositif d'entraînement en rotation (14, 14′) possède une broche (18) qui traverse un perçage (24) de l'étrier de frein (2) ou d'une douille (20) insérée dans ce perçage, avec un jeu radial comblé par une bague d'étanchéité (25), et possède, des deux côtés du perçage (24), des brides (21, 22), dont l'une au moins est supportée moyennant l'interposition d'un ressort (23), par l'étrier de frein (2) ou la douille (20) (figure 2).

5. Frein à disque suivant la revendication 3 ou 4, caractérisé par le fait que le levier d'entraînement (15) est relié à une première douille (27, 60) qui peut tourner par rapport à l'une ou l'autre des broches (18), que la première douille (27, 60) est accouplée, par l'intermédiaire d'un accouplement tournant unidirectionnel (52), qui réalise un blocage dans le sens de rotation de rattrapage de jeu, à une seconde douille (31, 42, 58) qui est montée de manière à pouvoir tourner sur la broche (18), que la seconde douille (31, 42, 58) est accouplée, par l'intermédiaire d'un accouplement limiteur de couple (33 et 36; 43), à une douille menée (34, 34′, 34˝) qui est montée sur la broche (18) avec blocage en rotation par rapport à cette dernière, et que la douille menée (34, 34′, 34˝) est accouplée, avec blocage en rotation, mais possibilité de déplacement axial, à la broche de réglage (7) qui loge cette douille.

6. Frein à disque suivant la revendication 5, caractérisé par le fait que la broche (18) possède, sur son extrémité tournée à l'opposé de la garniture de frein, des surfaces d'application (19, 19') pour un outil rotatif, permettant de faire tourner à volonté la broche.

7. Frein à disque suivant la revendication 5 ou 6, caractérisé par le fait que le couple transmis par l'accouplement limiteur de couple (33 et 36; 43) peut être ajusté au moyen de l'ajustement du serrage axial entre la seconde douille (31, 42) et la douille menée (34, 34′) qui est montée de manière à être déplaçable axialement sur la broche (18) (figures 2 et 3).

8. Frein à disque suivant la revendication 6 ou 7, caractérisé par le fait que la douille menée (34, 34′, 34˝) est chargée, en direction de la seconde douille (31, 42, 58), par un ressort (37) que traverse la broche (18) et qui prend appui par ailleurs contre cette broche (18).

9. Frein à disque suivant la revendication 8, caractérisé par le fait que le ressort prend appui sur un écrou (38) vissé, de manière à être réglable, sur la broche (18) (figures 2 et 3).

10. Frein à disque suivant la revendication 5, caractérisé par le fait que pour le support avec possibilité de déplacement axial et blocage en rotation de la douille menée (34′) sur la broche (18), les deux éléments possèdent des rainures longitudinales (47) et (48) qui se font face et dans lesquelles sont montées des billes de blocage (49) qui s'engagent dans les deux rainures (47 et 48) (figure 3, côté droit).

11. Frein à disque suivant la revendication 5, caractérisé par le fait que la douille menée (34, 34′) possède au moins un boulon (40) qui fait saillie radialement et qui s'engage dans au moins une rainure longitudinale intérieure de la broche de réglage (7) (figure 2 ou figure 3, côté gauche).

12. Frein à disque suivant la revendication 5, caractérisé par le fait que la douille menée (34˝) possède au moins une section comportant un profil longitudinal extérieur non cylindrique (57), éventuellement un profil à plusieurs surfaces et notamment un profil hexagonal, qui est guidé dans un profil intérieur correspondant de la broche de réglage (7) (figure 5).

13. Frein à disque suivant une ou plusieurs des revendications 5 à 12, caractérisé par le fait que l'accouplement rotatif unidirectionnel (52) est réalisé sous la forme d'un ressort enroulé (32), qui entoure, avec une précontrainte radiale, des sections cylindriques contiguës et alignées l'une sur l'autre des première et seconde douilles (37 et 31 ou 42) (figures 2 et 3).

14. Frein à disque suivant une ou plusieurs des revendications 5 à 13, caractérisé par le fait que l'accouplement limiteur de couple est réalisé sous la forme d'un accouplement à cône (36) situé sur les faces frontales, appliquées l'une contre l'autre, de la seconde douille (31) et de la douille menée (34) (figure 2).

15. Frein à disque suivant la revendication 14, caractérisé par le fait qu'entre la broche (18) et la seconde douille (31) est disposé un autre accouplement à cône (33), qui est chargé dans le sens de la fermeture par le ressort (37) (figure 2).

16. Frein à disque suivant une ou plusieurs des revendications 5 à 13, caractérisé par le fait que l'accouplement rotatif unidirectionnel est réalisé sous la forme d'un accouplement à rampes et à billes (43), qui possède des billes (44) disposées entre les faces frontales, tournées l'une vers l'autre, de la seconde douille (42, 58) et de la douille menée (34, 34˝) et qui s'engagent dans des renfoncements (45, 46) qui sont tournés l'un vers l'autre et se succèdent dans la direction périphérique, des deux douilles (32, 34′) (figures 3, 4 et 5).

17. Frein à disque suivant la revendication 16, caractérisé par le fait que les renfoncements (45, 46) possèdent, dans la direction périphérique des douilles (34′, 42), des surfaces obliques de montée pour les billes (44) (figure 4).

18. Frein à disque suivant la revendication 5 ou 6, éventuellement en liaison avec une ou plusieurs des revendications 7 à 12, caractérisé par le fait que la première douille est la douille extérieure (60) et la seconde douille est la douille extérieure (58) d'un système de roue libre à douille (59), éventuellement d'un système de roue libre à billes ou à cylindres, et que la broche (18) est accouplée, par l'intermédiaire d'au moins un accouplement rotatif à friction (bagues de palier lisse 63, 64), à une partie bloquée contre toute rotation (bague 66), éventuellement sur l'étrier de frein (2), le couple de roue libre du dispositif de roue libre à douille (59) étant inférieur au couple pouvant être transmis par l'accouplement à friction (bague de palier lisse 63, 64) (figure 5).

19. Frein à disque suivant la revendication 18, caractérisé par le fait que l'accouplement limiteur de couple est réalisé sous la forme d'un accouplement axial à rampes et billes (43 ) entre les faces frontales, tournées l'une vers l'autre, de la douille intérieure (58) du dispositif de roue libre à douille (59) et la douille menée (34˝) chargée par un ressort, dans le sens d'un serrage, contre cette douille intérieure (figure 5).

20. Frein à disque suivant les revendications 12 et 19, caractérisé par le fait qu'un ressort (37), qui charge la douille menée (34˝) dans le sens de la fermeture de l'accouplement à rampes et à billes (43), est porté par un corps annulaire (54) qui est supporté par une butée, éventuellement une bague de sécurité (55), dans le sens de la détente du ressort (34), contre la broche (18) qui traverse ce ressort, sans pouvoir tourner, grâce à la présence de méplats (53), que la section de la douille menée (34˝) possède également, sur sa face intérieure, le profil longitudinal non cylindrique (56) et que le corps annulaire (54) possède un profil extérieur non cylindrique correspondant, au moyen duquel il est guidé, sans possibilité de rotation relative mais avec possibilité de déplacement axial, sur le profil longitudinal intérieur (56) de la douille menée (34˝) (figure 5).

21. Frein à disque suivant la revendication 20, caractérisé par le fait que la broche (18) comporte, des deux côtés d'une bague de retenue (65) qui enserre la broche à proximité de son extrémité à l'opposé du disque de frein, et est retenue avec possibilité de déplacement sur l'étrier de frein (2) au moyen d'une bague de support élastomère, respectivement une bague de palier lisse (63, 64) qui fait saillie radialement, et la bague de palier lisse (63), tournée vers le disque de frein, étant déplaçable axialement et s'appliquant contre la face frontale, tournée à l'opposé du disque de frein, de la douille intérieure (58) du dispositif de roue libre à douille (59) et dont la bague de palier lisse (64), tournée à l'opposé du disque de frein, est supportée par une bride (67) de la broche (18) (figure 5).

22. Frein à disque suivant la revendication 21, caractérisé par le fait que la bride (67) qui loge la bague de palier lisse (64), forme l'extrémité, tournée à l'opposé du disque de frein, de la broche (18) et porte, sur sa périphérie, une denture axiale (69), qui engrène avec une denture axiale intérieure correspondante située sur un pignon (70) qui entoure la bride (67) et fait partie du dispositif de synchronisation (figure 5).

23. Frein à disque suivant une ou plusieurs des revendications 18 à 22, caractérisé par le fait que le levier d'entraînement (15) possède une section annulaire ou une section de fourche (62), qui entoure la douille extérieure (60) du dispositif de roue libre à douille (59) et qui - par rapport à l'axe de la douille extérieure (60) - est accouplé à la douille extérieure (60) au moyen de surfaces (61) pour l'application d'une clé, de manière à pouvoir tourner, tout au plus de façon limitée, mais à pouvoir basculer.
